(19) Europäisches Patentamt

European Patent Office

Office européen des brevets

(11) **EP 1 383 256 B1**

(12) **FASCICULE DE BREVET EUROPEEN**

(45) Date de publication et mention
de la délivrance du brevet:
**18.10.2006 Bulletin 2006/42**

(51) Int Cl.:
*H04B 10/18* (2006.01)      *G02B 6/02* (2006.01)
*G02B 6/34* (2006.01)

(21) Numéro de dépôt: **03291662.9**

(22) Date de dépôt: **04.07.2003**

(54) **Procédés de réalisation et d'amélioration d'une ligne de transmission optique et modules de compensation associés**

Verfahren zur Herstellung und Verbesserung einer optischen Übertragungsleitung und Kompensationsmodulen dafür

Method for building and improving an optical transmission line and compensation modules therefor

(84) Etats contractants désignés:
**AT BE BG CH CY CZ DE DK EE ES FI FR GB GR HU IE IT LI LU MC NL PT RO SE SI SK TR**

(30) Priorité: **18.07.2002 FR 0209137**

(43) Date de publication de la demande:
**21.01.2004 Bulletin 2004/04**

(73) Titulaire: **ALCATEL**
**75008 Paris (FR)**

(72) Inventeurs:
• **Fleury, Ludovic**
  **78390 Bois d'Arcy (FR)**
• **Sillard, Pierre**
  **78150 Le Chesnay (FR)**
• **Bertaina, Alain**
  **75014 Paris (FR)**
• **Beaumont, Florent**
  **78700 Conflans Ste Honorine (FR)**

• **Gorlier, Maxime**
  **75008 Paris (FR)**
• **de Montmorillon, Louise-Anne**
  **75017 Paris (FR)**
• **Nouchi, Pascale**
  **78600 Maisons-Lafitte (FR)**
• **Expert, Lionel**
  **75017 Paris (FR)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**WO-A-00/65754**      **US-B1- 6 259 845**

• **GRÜNER-NIELSEN ET AL: "Module for simultaneous C+L-band dispersion compensation and Raman amplification" OFC, vol. TuJ6, 2002, pages 65-66, XP002236789**

**Description**

L'invention concerne des procédés de réalisation et d'amélioration d'une ligne de transmission optique comprenant l'association d'une fibre optique de ligne et d'un module de compensation de la dispersion chromatique de ladite fibre optique de ligne. L'invention concerne également un module de compensation modifié par le procédé d'amélioration de la ligne de transmission optique.

Dans l'art antérieur, on distingue les lignes de transmission optique monobande et les lignes de transmission optique multibande. Toutes ces lignes de transmission optiques utilisent des modules de compensation de la dispersion chromatique de la fibre de ligne intégrant une ou plusieurs fibres optiques de compensation de dispersion chromatique (appelées DCF pour « dispersion compensating fiber » en terminologie anglo-saxonne).

Selon un premier art antérieur concernant les lignes de transmission optique monobandes, il est connu d'utiliser un module de compensation comprenant une fibre optique de compensation de la fibre optique de ligne considérée dans la bande spectrale considérée. Un inconvénient de cet art antérieur est d'être extrêmement peu évolutif. En effet, en cas de volonté d'utilisation multibande de la ligne transmission optique existante, le module de compensation doit soit être entièrement remplacé soit être utilisé avec d'autres modules placés en parallèle.

Selon un deuxième art antérieur concernant les lignes de transmission optique monobandes, par exemple présenté dans la demande de brevet WO01/69822, il est connu d'utiliser un module de compensation à l'intérieur duquel plusieurs fibres optiques de compensation de même type, les différentes fibres compensant dans la bande spectrale considérée, mais différentes entre elles cependant, par exemple l'une sous-compensant dans la bande spectrale considérée mais l'autre sur-compensant dans la même bande spectrale considérée, sont associées en série de manière à ce que cette association en série de plusieurs fibres optiques de compensation permettent une meilleure compensation dans la bande spectrale considérée, ce qui revient à élargir ladite bande spectrale considérée. Un inconvénient de cet art antérieur est que son module de compensation pour ligne de transmission optique monobande large est également figé une fois installé et ne peut être remplacé qu'en bloc.

Selon un troisième art antérieur concernant les lignes de transmission optique multibandes, il est connu d'utiliser plusieurs fibres optiques de compensation en parallèle avec des systèmes de multiplexage et de démultiplexage en longueur d'onde. Un inconvénient de cet art antérieur est d'être complexe et coûteux.

Selon un quatrième art antérieur concernant les lignes de transmission optique multibandes, par exemple présenté dans l'article numéro TuJ6 de « Lars Grüner-Nielsen » intitulé « module for simultaneous C+L-band dispersion compensation and Raman amplification » dans la conférence OFC 2002 en date du 19/03/02, il est connu d'utiliser un module associant deux fibres optiques de compensation en série. Les deux fibres optiques de compensation sont choisies pour que leur combinaison en série compense la dispersion chromatique de la fibre optique de ligne dans la bande C et dans la bande L, mais aucune d'elles n'est optimisée pour la compensation dans une bande spectrale, que ce soit la bande C ou la bande L. Cet art antérieur présente également l'inconvénient d'être figé une fois installé. WO 0065754 divulgue un module de compensation de dispersion selon l'état de l'art.

Le module de compensation d'origine, respectivement le module de compensation modifié, sont basés sur l'utilisation de plusieurs fibres de compensation disposées en série pour offrir une compensation qui puisse devenir, respectivement qui soit, multibande sur la ligne de transmission considérée. L'invention propose un procédé de réalisation d'une ligne de transmission optique qui soit évolutive, c'est-à-dire dont le nombre de bandes spectrales compensées au niveau dispersion chromatique puisse augmenter sans nécessiter le remplacement complet du module de compensation, mais seulement d'une partie de ce module. Sur la ligne de transmission optique, pour chaque nouvelle bande spectrale de fonctionnement à compenser au niveau dispersion chromatique, il suffira d'échanger l'un des sous-modules du module de compensation, tout en ayant à chaque moment de la vie de la ligne de transmission optique une bonne compensation de la dispersion chromatique sur l'ensemble des bandes spectrales de fonctionnement utilisées à ce moment là sur la ligne de transmission optique, ce qui garantie une bonne qualité de compensation pour un coût global moindre. Par exemple, soit un sous-module C comportant une fibre optique de compensation dans la bande C dont il faudrait une longueur lo pour compenser une fibre optique de ligne donnée et un sous-module L comportant une fibre optique de compensation dans la bande L dont il faudrait une longueur lo pour compenser la même fibre optique de ligne, les deux fibres optiques de compensation étant choisies de manière à ce que leur association en série, à raison d'une longueur de lo/2 chacune, offre une bonne compensation dans les bandes C et L. Le procédé de réalisation consiste à installer la fibre optique de ligne avec un module de compensation d'origine lequel est constitué de deux sous-modules C indépendants associés en série, ce qui entraîne une longueur globale de fibre optique de compensation dans la bande C valant lo répartie en deux sous-longueurs lo/2, une par sous-module. La ligne de transmission optique fonctionne un certain temps, par exemple quelques années, dans la bande C, avec une très bonne compensation dans cette bande C. Après cette période de fonctionnement, le procédé d'amélioration consiste à remplacer l'un des sous-modules C par un sous-module L, le module de compensation modifié étant alors constitué de l'association en série d'un sous-module C et d'un sous-module L, la ligne de transmission optique fonctionnant alors dans les bandes C et L avec une bonne compensation dans les bandes C et L. Les sous-modules étant séparables de la structure du module et les raccordements entre sous-module étant d'une part identifiables à l'oeil nu sans nécessiter de mesure optique complémentaire et d'autre part accessibles de l'extérieur du module sans endommagement du module, le remplacement s'effectue aisément. Au cours de la vie de cette ligne de transmission optique, moins de longueur de fibre optique de compensation aura été nécessaire par rapport au cas où un module optimisé pour la compensation en bande C est remplacé en bloc par un module optimisé pour la compensation en bande C et L, et ceci pour une qualité de compensation comparable à chaque moment de la vie de la ligne de transmission optique. De la même manière, on peut par exemple envisager d'installer directement une ligne de transmission optique avec un module de compensation modifié, la ligne de transmission optique étant destinée à fonctionner dans les bandes C et L, constitué de trois sous-modules en série, c'est-à-dire deux sous-modules C et un sous-module L, pouvant évoluer ensuite vers un module de compensation modifié dans les bandes S, C et L, constitué de trois sous-modules en série, c'est-à-dire un sous-module S, un sous-module C et un sous-module L ou bien vers un module de compensation modifié dans les bandes C, L et U, constitué de trois sous-modules en série, c'est-à-dire un sous-module C, un sous-module L et un sous-module U.

Selon l'invention, il est prévu un module de compensation de dispersion chromatique d'une fibre optique de ligne dans plusieurs bandes spectrales contiguës et disjointes, une bande spectrale couvrant au moins 30nm, caractérisé en ce que le module comprend une structure portant plusieurs sous-modules qui sont séparables de la structure au moins pour l'un d'entre eux, qui sont disposés en série, qui sont raccordés les uns aux autres par un ou plusieurs raccordements identifiables à l'oeil nu sans mesure optique complémentaire et accessibles de l'extérieur sans endommagement du module, qui comportent chacun un support sur lequel est fixée au moins une fibre optique de compensation de dispersion chromatique, au moins l'une desdites fibres optiques de compensation présentant un taux de compensation compris entre 0,9 et 1,1 pour la longueur d'onde centrale de l'une desdites bandes spectrales, au moins deux sous-modules ayant leur fibre optique de compensation de nature différente entre elles. C'est le module modifié.

Selon l'invention, il est également prévu un procédé de réalisation d'une ligne de transmission optique comprenant une étape d'installation d'une fibre optique de ligne et d'un module de compensation de ladite fibre optique de ligne, selon l'une quelconque des revendications 1 à 9.

Selon l'invention, il est encore prévu un procédé d'amélioration d'une ligne de transmission optique comprenant une fibre optique de ligne et un module de compensation, d'origine ou modifié, de ladite fibre optique de ligne et ayant déjà fonctionné, comprenant une ou plusieurs étapes d'échange consistant chacune à retirer dudit module l'un des sous-modules et à le remplacer dans ledit module par un sous-module supplémentaire dont la fibre optique de compensation est de nature différente de celle du sous-module retiré, afin d'obtenir un module modifié.

L'invention sera mieux comprise et d'autres particularités et avantages apparaîtront à l'aide de la description ci-après et des dessins joints, donnés à titre d'exemples, où :

- la figure 1 représente schématiquement un exemple de module de compensation d'origine ;
- la figure 2 représente schématiquement un exemple de module de compensation modifié selon l'invention ;
- la figure 3 représente schématiquement les propriétés d'exemples de fibres de compensation utilisées dans les modules de compensation selon l'invention ;
- la figure 4 représente schématiquement les structures d'exemples de fibres de compensation utilisées dans les modules de compensation selon l'invention ;
- les figures 5, 7, 9 et 11 représentent schématiquement en fonction de la longueur d'onde les dispersions chromatiques cumulées sur 100 km d'une ligne de transmission optique incluant des exemples de fibres de compensation décrites au niveau des figures 3 et 4 ;
- les figures 6, 8, 10 et 12 représentent schématiquement en fonction de la longueur d'onde les dispersions chromatiques d'exemples de fibres de compensation décrites au niveau des figures 3 et 4.

Le procédé de réalisation de ligne de transmission optique selon l'invention associe un module de compensation d'origine selon l'invention à une fibre optique de ligne. Le procédé d'amélioration de ligne de transmission optique selon l'invention remplace l'un des sous-modules du module de compensation d'origine pour en faire un module de compensation modifié selon l'invention. Un module de compensation modifié selon l'invention peut aussi être transformé en un autre module de compensation modifié selon l'invention par l'intermédiaire du procédé d'amélioration de la ligne de transmission optique selon l'invention. Le procédé de réalisation de ligne de transmission optique selon l'invention peut sauter des étapes et associer directement un module de compensation modifié selon l'invention à une fibre optique de ligne lors de l'étape d'installation. De préférence, lors de la mise en oeuvre du procédé d'amélioration selon l'invention, au moins l'un des sous-modules d'origine n'a fait ni ne fait l'objet d'aucune desdites étapes d'échange consistant à le remplacer par un sous-module dont la fibre optique de compensation est optimisée dans une bande spectrale différente de la sienne, il peut toutefois bien sûr être remplacé par un sous-module identique ou par un sous-module dont la fibre optique de compensation est optimisée dans la même bande spectrale ce qui correspondrait à un échange « standard ».

Le module, d'origine ou modifié, comprend une structure qui porte les sous-modules. Au moins l'un, et de préférence certains des sous-modules sont séparables de la structure du module, tous ceux qui sont destinés à terme à être remplacés, ce qui permet de les remplacer isolément, ils peuvent aussi être tous séparables de la structure du module. De préférence, les sous-modules sont indépendants les uns des autres, c'est-à-dire que tout sous-module peut être retiré du module sans avoir besoin de toucher aux autres sous-modules. Chaque sous-module a son propre support sur lequel est fixée la ou les fibres optiques de compensation qu'il contient : il n'en contient de préférence qu'une seule ; toutefois, il peut en contenir plusieurs par exemple dans le cas de plusieurs fibres optiques de ligne en parallèle ou bien par exemple dans le cas où plusieurs fibres optiques en série sont nécessaires pour réaliser la compensation de dispersion chromatique d'une bande spectrale. La fibre optique de compensation est fixée sur son support lequel maintient donc ladite fibre optique. De préférence, les sous-modules ont chacun leur propre boîtier, un boîtier étant un support fermé ou presque fermé vis-à-vis de l'extérieur. La structure du module peut également être un boîtier global intégrant tous les boîtiers ou tous les supports des différents sous-modules.

Les sous-modules sont raccordés entre eux par un ou plusieurs raccordements. Chaque raccordement est identifiable à l'oeil nu sans nécessiter de mesure optique complémentaire et accessible de l'extérieur du module sans endommagement du module, afin de permettre un remplacement aisé d'un sous-module par un autre sous-module lors de l'amélioration de la ligne de transmission optique. Le raccordement est par exemple de type dit « fixe » comme une soudure identifiable ou rendue identifiable, ce qui a le mérite de la stabilité et d'une faible dégradation des pertes par atténuation. Le raccordement peut aussi être par exemple de type dit « démontable » comme un connecteur ce qui a le mérite de permettre un remplacement extrêmement aisé de sous-module. D'autres types de raccordement dits « fixe » ou « semi-fixes » restent possibles mais sont de préférence à éviter dans la mesure où ils ne sont pas ou pas assez stables dans le temps, ladite ligne de transmission étant de préférence, généralement prévue pour plusieurs années, au moins pour plusieurs mois.

Le module d'origine est un module de compensation de dispersion chromatique d'une fibre optique de ligne dans une bande spectrale donnée, comprenant plusieurs sous-modules. Ladite bande spectrale est de préférence la bande C mais toute autre bande spectrale utilisée par les lignes de transmission optique est envisageable. Les sous-modules sont disposés en série, le signal de transmission lumineux, après avoir traversé la fibre optique de ligne, va donc successivement traverser les différentes fibres optiques de compensation des différents sous-modules. Les sous-modules sont par exemple indépendants les uns des autres et sont par exemple raccordés les uns aux autres par des raccordements constitués chacun par un connecteur ou comprenant chacun au moins un connecteur comme par exemple la séquence suivante, connecteur, élément ou fibre optique ayant une fonction particulière, connecteur, ou encore plusieurs connecteurs dans le cas d'une ligne de transmission comportant plusieurs fibres optiques de ligne en parallèle. Les raccordements peuvent aussi être constitués chacun par une soudure ou comprendre chacun au moins une soudure. Chaque sous-module comporte une, et de préférence une seule, fibre optique de compensation de dispersion chromatique dans la bande spectrale considérée. La fibre optique de compensation est de même nature pour tous les sous-modules, c'est-à-dire que c'est la même fibre ayant le même taux de compensation dans la bande spectrale considérée, aux tolérances et aux erreurs de fabrication près, mais qui peut éventuellement être utilisée avec des longueurs différentes d'un sous-module à l'autre.

De préférence, le module de compensation d'origine comprend deux sous-modules seulement. Il peut avantageusement en comporter également trois ou quatre. Au-delà de trois ou quatre sous-modules, il devient plus difficile de concevoir les fibres optiques de compensation de manière à ce que le remplacement d'un sous-module par un autre sous-module permette l'utilisation d'une bande spectrale supplémentaire avec un bon taux de compensation dans l'ensemble des bandes spectrales utilisées sur la ligne de transmission optique.

De préférence, la fibre optique de compensation est de même longueur pour tous les sous-modules ; la conception de sous-modules identiques entre eux permet une réduction supplémentaire des coûts.

De préférence, la bande spectrale considérée est la bande C, c'est-à-dire la bande spectrale s'étendant d'environ 1530nm à 1570nm, car c'est la bande spectrale présentant le moins d'atténuation pour les fibres optiques de ligne, donc celle qui doit être utilisée en priorité et donc en premier lors de l'installation d'une ligne de transmission optique monobande au départ et destinée à devenir multibande mais seulement ultérieurement.

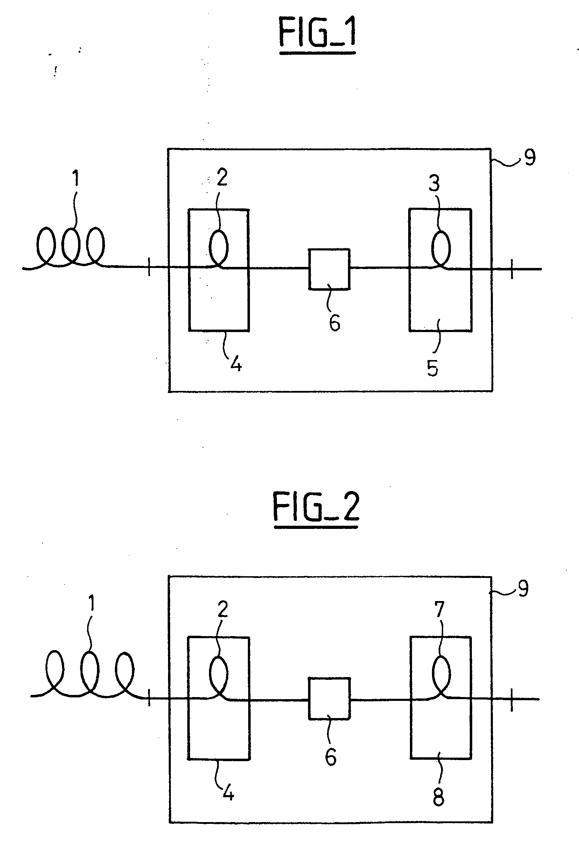

La figure 1 représente schématiquement un exemple de module de compensation d'origine. Le module comporte successivement une fibre optique de ligne 1, un premier sous-module 4 comprenant une fibre optique de compensation 2, un connecteur 6, un deuxième sous-module 5, identique au sous-module 4, comprenant une fibre optique de compensation 3, identique à la fibre optique de compensation 2. Une structure 9 sous la forme d'un boîtier global englobe les précédents éléments.

Le module modifié est un module de compensation de dispersion chromatique d'une fibre optique de ligne dans plusieurs bandes spectrales contiguës et disjointes, par exemple plusieurs bandes parmi les bandes S, C, L et U, mais toutes autres bandes spectrales utilisées par des fibres optiques de ligne sont envisageables. Pour distinguer les lignes de transmission optique monobandes des lignes de transmission optique multibandes, c'est-à-dire plusieurs bandes spectrales d'une bande spectrale élargie, considérons qu'une bande spectrale couvre au moins 30nm.

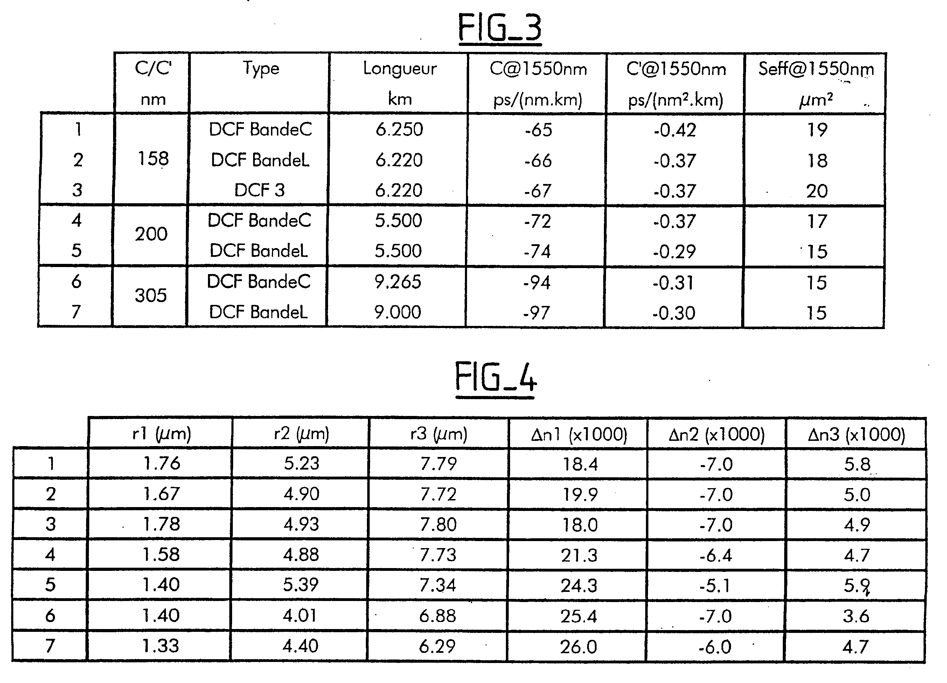

Le module modifié est un module de compensation qui comprend plusieurs sous-modules. Les sous-modules sont disposés en série, le signal de transmission lumineux, après avoir traversé la fibre optique de ligne, va donc successivement traverser les différentes fibres optiques de compensation des différents sous-modules. Les sous-modules sont par exemple indépendants les uns des autres et sont par exemple raccordés les uns aux autres par des raccordements constitués chacun par un connecteur ou comprenant chacun au moins un connecteur comme par exemple la séquence suivante, connecteur, élément ou fibre optique ayant une fonction particulière, connecteur, ou encore plusieurs connecteurs dans le cas d'une ligne de transmission comportant plusieurs fibres optiques de ligne en parallèle. Les raccordements peuvent aussi être constitués chacun par une soudure ou comprendre chacun au moins une soudure. Chaque sous-module comporte une, et de préférence une seule, fibre optique de compensation de dispersion chromatique dans une des bandes spectrales considérées. Au moins deux sous-modules ont leur fibre optique de compensation qui sont de nature différente entre elles, c'est-à-dire que ce sont des fibres ayant des taux de compensation en fonction de la longueur d'onde distincts l'un de l'autre, par exemple l'une est optimisée dans une bande spectrale donnée et l'autre est optimisée dans une autre bande spectrale. Une fibre optique de compensation est considérée comme optimisée dans une bande spectrale donnée si son taux de compensation pour la longueur d'onde centrale de ladite bande spectrale est compris entre 0,9 et 1,1, à condition bien sûr d'en choisir en plus une longueur adaptée. De préférence, chaque fibre optique de compensation est une fibre optique de compensation présentant un taux de compensation compris entre 0,9 et 1,1 pour la longueur d'onde centrale de l'une des bandes spectrales. Toutefois, il est possible que seule l'une des fibres optiques de compensation soit optimisée pour l'une des bandes spectrales, ce sera par exemple la fibre optique de compensation contenue dans les sous-modules du module d'origine. En effet, par exemple dans le cas d'un module modifié destiné à compenser dans les bandes C et L et comprenant deux sous-modules, le premier sous-module ayant une fibre optique de compensation optimisée dans la bande C, le deuxième sous-module a de préférence une fibre optique de compensation optimisée dans la bande L mais pas nécessairement, ladite fibre optique pouvant en effet n'être optimisée dans aucune bande spectrale (c'est l'exemple n°3 désigné DCF3 des figures 3 et 4 décrites ultérieurement), il faut toutefois que son association en série avec la fibre optique de compensation du premier sous-module offre une bonne compensation dans les bandes C et L.

De préférence, le module de compensation modifié comprend deux sous-modules seulement. Il peut avantageusement en comporter également trois ou quatre. Au-delà de trois ou quatre sous-modules, il devient plus difficile de concevoir les fibres optiques de compensation de manière à ce que le remplacement d'un sous-module par un autre sous-module permette l'utilisation d'une bande spectrale supplémentaire avec un bon taux de compensation dans l'ensemble des bandes spectrales utilisées sur la ligne de transmission optique.

De préférence, la fibre optique de compensation est de même longueur pour tous les sous-modules ; la conception de sous-modules identiques entre eux permet une réduction supplémentaire des coûts.

De préférence, les bandes spectrales considérées sont les bandes C et L, c'est-à-dire les bandes spectrales s'étendant d'environ 1530nm à 1570nm pour la bande C et d'environ 1570nm à 1610nm pour la bande L.

La figure 2 représente schématiquement un exemple de module de compensation modifié selon l'invention. Le module comporte successivement une fibre optique de ligne 1, un premier sous-module 4 comprenant une fibre optique de compensation 2, un connecteur 6, un deuxième sous-module 8, différent du sous-module 4, comprenant une fibre optique de compensation 7, différente de la fibre optique de compensation 2, les fibres optiques de compensation 2 et 7 étant respectivement optimisées dans des bandes spectrales différentes qui sont contiguës et disjointes l'une de l'autre, le point à 1570nm faisant la frontière entre elles. Une structure 9 sous la forme d'un boîtier global englobe les précédents éléments.

Dans le cas d'une ligne de transmission optique bibande, le module de compensation modifié est constitué de deux sous-modules en série reliés par exemple par un connecteur. Soient la première bande spectrale B1 ayant pour longueur d'onde centrale $\lambda_1$ et la deuxième bande spectrale B2, contiguë et disjointe de la première bande spectrale B1, de longueur d'onde centrale $\lambda_2$. Une méthode préférentielle de détermination de l'allure de la dispersion chromatique de chacune des deux fibres optiques de compensation dans chacune des deux bandes spectrales va maintenant être donnée. Soient L, $L_1$, $L_2$, les longueurs respectivement de la fibre optique de ligne, de la première fibre optique F1 de compensation dans la première bande spectrale B1, de la deuxième fibre optique F2 de compensation dans la deuxième bande spectrale B2. Soient $C(\lambda)$, $C_1(\lambda_1)$, $C_2(\lambda_2)$ les dispersions chromatiques respectivement de la fibre optique de ligne, de la première fibre optique F1 de compensation dans la première bande spectrale B1, de la deuxième fibre optique F2 de compensation dans la deuxième bande spectrale B2.

Pour une application donnée, soit M la dispersion chromatique cumulée maximale acceptable pour la ligne de transmission optique, constituée de la fibre optique de ligne, de la première fibre optique F1 de compensation, de la deuxième fibre optique F2 de compensation, aux longueurs d'onde centrales $\lambda_1$ et $\lambda_2$ respectivement des bandes spectrales B1 et B2. A ces deux longueurs centrales, on a alors les relations suivantes :

$$\left| LC(\lambda_1) + L_1 C_1(\lambda_1) + L_2 C_2(\lambda_1) \right| \le M \qquad (1)$$

$$\left| LC(\lambda_2) + L_1 C_1(\lambda_2) + L_2 C_2(\lambda_2) \right| \le M \qquad (1)$$

M est de préférence comprise entre 0 et 50 ps/nm.

Pour ladite application, soit $N_1$ la dispersion chromatique cumulée pour la ligne de transmission optique si le module de compensation était constitué de deux sous-modules identiques intégrant chacun une fibre F1 de compensation, à la longueur d'onde centrale $\lambda_1$ de la bande spectrale B1. A la longueur d'onde centrale $\lambda_1$, on a alors la relation suivante :

$$LC(\lambda_1) + 2L_1 C_1(\lambda_1) = N_1 \qquad (2)$$

Pour ladite application, soit $N_2$ la dispersion chromatique cumulée pour la ligne de transmission optique si le module de compensation était constitué de deux sous-modules identiques intégrant chacun une fibre F2 de compensation, à la longueur d'onde centrale $\lambda_2$ de la bande spectrale B2. A la longueur d'onde centrale $\lambda_2$, on a alors la relation suivante :

$$LC(\lambda_2) + 2L_2 C_2(\lambda_2) = N_2 \qquad (3)$$

Les valeurs de $N_1$ et de $N_2$ sont de préférence choisies égales entre elles et comprises entre 0 et 50ps/nm, pour que l'association de deux sous-modules identiques offrent une bonne compensation de dispersion chromatique dans une bande spectrale.

Soient les développements limités des dispersions chromatiques des fibres F1 et F2 sous la forme :

$$C_1(\lambda) = a_1 + b_1(\lambda - \lambda_1) + \frac{c_1}{2}(\lambda - \lambda_1)^2 + o(\lambda^3) \qquad (4)$$

$$C_2(\lambda) = a_2 + b_2(\lambda - \lambda_2) + \frac{c_2}{2}(\lambda - \lambda_2)^2 + o(\lambda^3) \qquad (4)$$

Pour des fibres optiques dont les termes d'ordre trois ou supérieur ne seraient pas négligeables, les méthodes numériques usuelles restent applicables. Ces méthodes numériques permettent aux relations (1) d'être vérifiées pour un plus grand nombre de longueurs d'onde.

Les coefficients $a_1$ et $a_2$ sont déterminés par les relations (2) et (3).

Soient $\tau_1$ et $\tau_2$ les taux de compensation respectivement des fibres F1 et F2, choisis compris entre 0,9 et 1,1, pour que l'association de deux sous-modules identiques offrent un bon taux de compensation de dispersion chromatique dans une bande spectrale, ces taux de compensation étant définis par les relations suivantes :

$$\frac{b_1}{a_1} = \tau_1 \left( \frac{C'(\lambda_1)}{C(\lambda_1)} \right) \qquad (5)$$

$$\frac{b_2}{a_2} = \tau_2 \left( \frac{C'(\lambda_2)}{C(\lambda_2)} \right) \qquad (5)$$

avec C' la pente de dispersion chromatique de la fibre optique de ligne.

Une fois les coefficients $a_1$ et $a_2$ déterminés par les relations (2) et (3), les coefficients $b_1$ et $b_2$ sont déterminés

par les relations (5).

En substituant les relations (4) dans les relations (1) et en utilisant les relations (2) et (3), on aboutit à la relation (6) :

$$c_{1m} \le c_1 \le 0 \; ; \; c_{2m} \le c_2 \le 0 \qquad (6)$$

avec :

$$c_{1m} = -\frac{2a_1}{\Delta^2 f_1}\left(-2M + 2N_1 - f_2 + f_1 + \frac{b_1}{a_1}\Delta f_1\right)$$

$$c_{2m} = -\frac{2a_2}{\Delta^2 f_2}\left(-2M + 2N_2 - f_1 + f_2 - \frac{b_2}{a_2}\Delta f_2\right)$$

$$f_i = LC(\lambda_i) - N_i \quad (i = 1,2) \; ; \quad \Delta = \lambda_2 - \lambda_1$$

La relation (6) est la condition à satisfaire par les coefficients $c_1$ et $c_2$ des deux fibres F1 et F2.

La figure 3 représente schématiquement les propriétés d'exemples de fibres de compensation utilisées dans les modules de compensation selon l'invention. La figure 3 se présente sous la forme d'un tableau comportant neuf colonnes et huit lignes. La première ligne correspond aux intitulés des propriétés des fibres optiques de compensation de dispersion chromatique. Les sept lignes suivantes correspondent à sept exemples de fibre optique de compensation. La première colonne correspond aux numéros des exemples de fibres optiques de compensation. La deuxième colonne correspond au ratio exprimé en nm entre la dispersion chromatique et la pente de la dispersion chromatique à une longueur d'onde valant 1550nm. La troisième colonne correspond au type de fibre optique de compensation, DCF bande C indiquant une fibre optique de compensation optimisée dans la bande C, DCF bande L indiquant une fibre optique de compensation optimisée dans la bande L, DCF 3 indiquant une fibre optique de compensation qui n'est optimisée ni dans la bande C ni dans la bande L. La quatrième colonne correspond à la longueur exprimée en km de fibre optique de compensation utilisée dans le sous-module correspondant dans le cas où la longueur de la fibre optique de ligne vaut 100km. La cinquième colonne correspond à la dispersion chromatique exprimée en ps/(nm.km) à la longueur d'onde de 1550nm. La sixième colonne correspond à la pente de dispersion chromatique exprimée en ps/(nm².km) à la longueur d'onde de 1550nm. La septième et dernière colonne correspond à la surface effective exprimée $\mu$m² à la longueur d'onde de 1550nm.

La figure 4 représente schématiquement les structures d'exemples de fibres de compensation utilisées dans les modules de compensation selon l'invention. La figure 4 se présente sous la forme d'un tableau comportant sept colonnes et huit lignes. La première ligne correspond aux intitulés des éléments structurels permettant de définir les fibres optiques de compensation de dispersion chromatique. Les sept lignes suivantes correspondent à sept exemples de fibre optique de compensation. La première colonne correspond aux numéros des exemples de fibres optiques de compensation. Les trois colonnes suivantes correspondent respectivement aux rayons extérieurs des trois tranches constituant le coeur (au sens large, c'est-à-dire la partie variable du profil d'indice allant du centre jusqu'à la gaine extérieure d'indice constant) de chacune des fibres optiques de compensation, ces rayons extérieurs étant exprimés en $\mu$m. Les trois dernières colonnes correspondent respectivement à mille fois les différences d'indice entre d'une part les trois tranches constituant le coeur (au sens large, c'est-à-dire la partie variable du profil d'indice allant du centre jusqu'à la gaine extérieure d'indice constant) de chacune des fibres optiques de compensation et d'autre part les gaines extérieures d'indice constant desdites fibres optiques de compensation. Toutes les fibres optiques de compensation considérées correspondent à un profil d'indice comportant un coeur (au sens strict, c'est-à-dire l'échelon central du profil véhiculant l'essentiel de l'énergie), une gaine intérieure enterrée et un anneau.

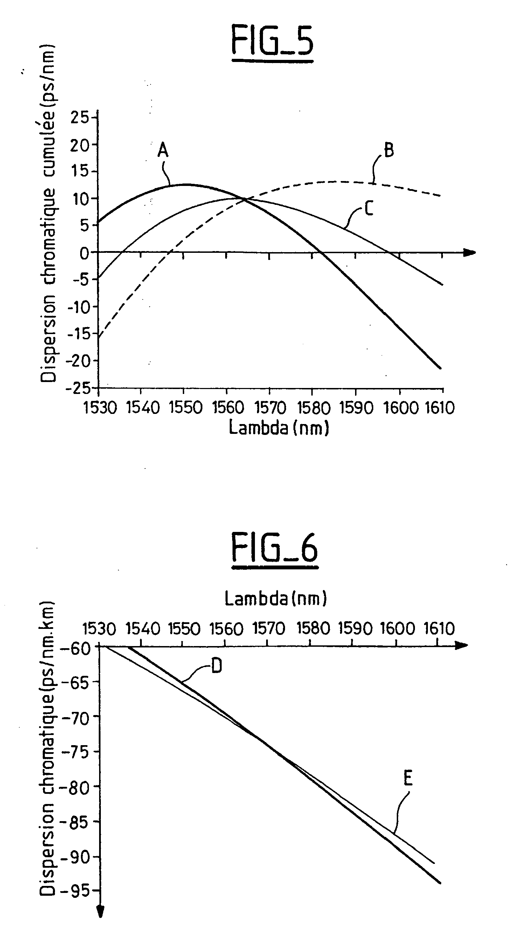

Les figures 5, 7, 9 et 11 représentent schématiquement en fonction de la longueur d'onde les dispersions chromatiques cumulées sur une ligne de transmission incluant des exemples de fibres de compensation décrites au niveau des figures 3 et 4. En ordonnée, est indiquée en ps/nm la dispersion chromatique cumulée pour l'ensemble de la ligne de transmission optique incluant la fibre de ligne et les deux fibres optiques de compensation disposées en série. En abscisse, est indiquée en nm la longueur d'onde (par le terme « lambda »). Chaque courbe indique en fonction de la longueur d'onde la dispersion chromatique cumulée d'une ligne de transmission optique constituée de la fibre optique de ligne, d'un premier sous-module comprenant une fibre optique de compensation et d'un deuxième sous-module comprenant une fibre optique de compensation, ces éléments étant disposés en série.

Considérons la figure 5. Pour la courbe A, le premier sous-module intègre une fibre optique de compensation correspondant à l'exemple n°1 et le deuxième sous-module intègre une fibre optique de compensation correspondant à l'exemple n°1. Pour la courbe B, le premier sous-module intègre une fibre optique de compensation correspondant à l'exemple n°2 et le deuxième sous-module intègre une fibre optique de compensation correspondant à l'exemple n°2. Pour la courbe C, le premier sous-module intègre une fibre optique de compensation correspondant à l'exemple n°1 et le deuxième sous-module intègre une fibre optique de compensation correspondant à l'exemple n°2.

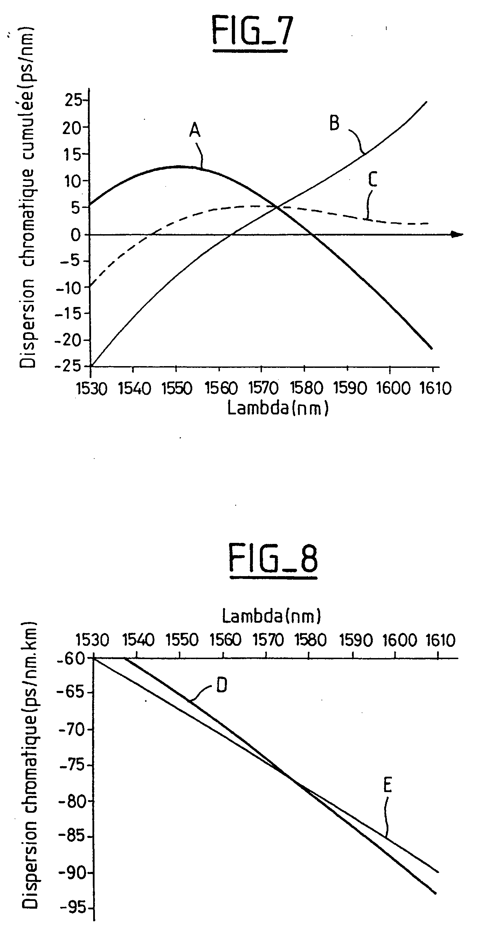

Considérons la figure 7. Pour la courbe A, le premier sous-module intègre une fibre optique de compensation correspondant à l'exemple n°1 et le deuxième sous-module intègre une fibre optique de compensation correspondant à l'exemple n°1. Pour la courbe B, le premier sous-module intègre une fibre optique de compensation correspondant à l'exemple n°3 et le deuxième sous-module intègre une fibre optique de compensation correspondant à l'exemple n°3. Pour la courbe C, le premier sous-module intègre une fibre optique de compensation correspondant à l'exemple n°1 et le deuxième sous-module intègre une fibre optique de compensation correspondant à l'exemple n°3.

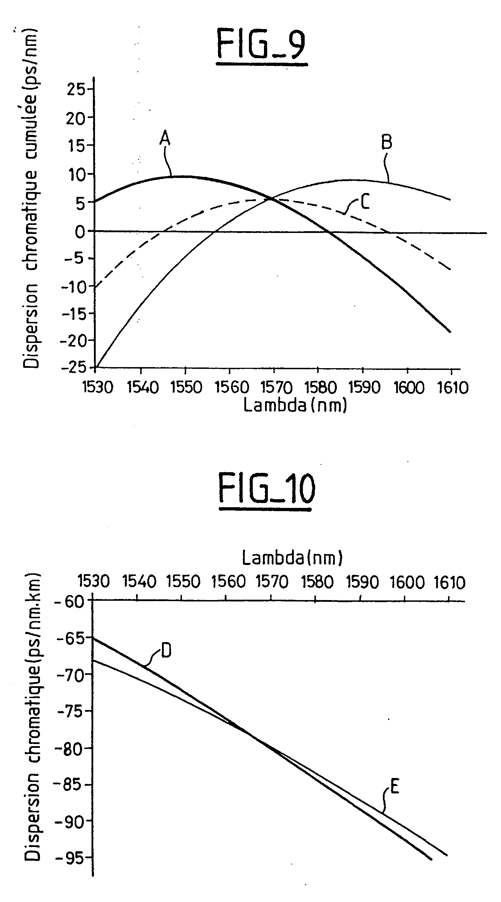

Considérons la figure 9. Pour la courbe A, le premier sous-module intègre une fibre optique de compensation correspondant à l'exemple n°4 et le deuxième sous-module intègre une fibre optique de compensation correspondant à l'exemple n°4. Pour la courbe B, le premier sous-module intègre une fibre optique de compensation correspondant à l'exemple n°5 et le deuxième sous-module intègre une fibre optique de compensation correspondant à l'exemple n°5. Pour la courbe C, le premier sous-module intègre une fibre optique de compensation correspondant à l'exemple n°4 et le deuxième sous-module intègre une fibre optique de compensation correspondant à l'exemple n°5.

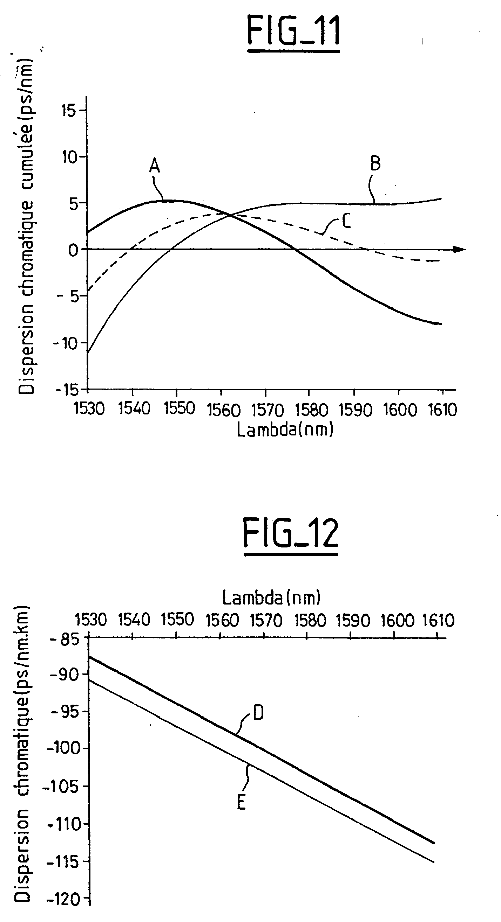

Considérons la figure 11. Pour la courbe A, le premier sous-module intègre une fibre optique de compensation correspondant à l'exemple n°6 et le deuxième sous-module intègre une fibre optique de compensation correspondant à l'exemple n°6. Pour la courbe B, le premier sous-module intègre une fibre optique de compensation correspondant à l'exemple n°7 et le deuxième sous-module intègre une fibre optique de compensation correspondant à l'exemple n°7. Pour la courbe C, le premier sous-module intègre une fibre optique de compensation correspondant à l'exemple n°6 et le deuxième sous-module intègre une fibre optique de compensation correspondant à l'exemple n°7.

Sur l'ensemble des figures 5, 7, 9 et 11, on constate au niveau des courbes A que la compensation monobande C est bonne et au niveau des courbes C que la compensation bibande C et L est également bonne.

Les figures 6, 8, 10 et 12 représentent schématiquement en fonction de la longueur d'onde les dispersions chromatiques d'exemples de fibres de compensation décrites au niveau des figures 3 et 4.

En ordonnée, est indiquée en ps/nm.km la dispersion chromatique pour la fibre optique de compensation considérée. En abscisse, est indiquée en nm la longueur d'onde (par le terme lambda).

Considérons la figure 6. La courbe D correspond à la fibre optique de compensation de l'exemple n°1. La courbe E correspond à la fibre optique de compensation de l'exemple n°2.

Considérons la figure 8. La courbe D correspond à la fibre optique de compensation de l'exemple n°1. La courbe E correspond à la fibre optique de compensation de l'exemple n°3.

Considérons la figure 10. La courbe D correspond à la fibre optique de compensation de l'exemple n°4. La courbe E correspond à la fibre optique de compensation de l'exemple n°5.

Considérons la figure 12. La courbe D correspond à la fibre optique de compensation de l'exemple n°6. La courbe E correspond à la fibre optique de compensation de l'exemple n°7.

## Revendications

1. Module de compensation de dispersion chromatique d'une fibre optique (1) de ligne dans plusieurs bandes spectrales contiguës et disjointes, une bande spectrale couvrant au moins 30nm, le module comprenant une structure (9) portant plusieurs sous-modules (4, 8) qui sont séparables de la structure (9) au moins pour l'un d'entre eux, qui sont disposés en série, qui sont raccordés les uns aux autres par un ou plusieurs raccordements (6) identifiables à l'oeil nu sans mesure optique complémentaire et accessibles de l'extérieur sans endommagement du module, qui comportent chacun un support sur lequel est fixée au moins une fibre optique (2, 7) de compensation de dispersion chromatique, au moins l'une (2) desdites fibres optiques (2, 7) de compensation présentant un taux de compensation compris entre 0,9 et 1,1 pour la longueur d'onde centrale de l'une desdites bandes spectrales, au moins deux sous-modules (4, 8) ayant leur fibre optique (2, 7) de compensation de nature différente entre elles.

2. Module de compensation selon la revendication 1, **caractérisé en ce que** les bandes spectrales sont les bandes C et L.

3. Module de compensation selon l'une quelconque des revendications 1 2, **caractérisé en ce que** chaque fibre optique de compensation est une fibre optique de compensation présentant un taux de compensation compris entre 0,9 et 1,1 pour la longueur d'onde centrale de l'une des bandes spectrales.

4. Module de compensation selon l'une quelconque des revendications 1 à 3, **caractérisé en ce que** chaque raccordement comprend au moins une soudure.

5. Module de compensation selon l'une quelconque des revendications 1 à 4, **caractérisé en ce que** chaque raccordement comprend au moins un connecteur.

6. Module de compensation selon l'une quelconque des revendications précédentes, **caractérisé en ce que** les sous-modules sont indépendants les uns des autres.

7. Module de compensation selon l'une quelconque des revendications précédentes, **caractérisé en ce que** le module comprend deux sous-modules seulement.

8. Module de compensation selon l'une quelconque des revendications précédentes, **caractérisé en ce que** la ou les fibres optiques de compensation sont de même longueur pour tous les sous-modules.

9. Module de compensation selon l'une quelconque des revendications précédentes, **caractérisé en ce que** chaque sous-module comprend une et une seule fibre optique de compensation.

10. Procédé de réalisation d'une ligne de transmission optique comprenant une étape d'installation d'une fibre optique (1) de ligne et d'un module de compensation de ladite fibre optique de ligne selon l'une quelconque des revendications 1 à 9.

11. Procédé d'amélioration d'une ligne de transmission optique comprenant une fibre optique (1) de ligne et un module de compensation de ladite fibre optique de ligne étant selon l'une quelconque des revendications 1 à 9 et ayant déjà fonctionné, comprenant une ou plusieurs étapes d'échange consistant chacune à retirer dudit module l'un (5) des sous-modules et à le remplacer dans ledit module par un sous-module (8) supplémentaire dont la fibre optique (7) de compensation est de nature différente de celle (2) du sous-module (5) retiré, afin d'obtenir un autre module selon l'une quelconque des revendications 1 à 9.

12. Procédé d'amélioration d'une ligne de transmission optique comprenant une fibre optique (1) de ligne et un module de compensation de dispersion chromatique d'une fibre optique (1) de ligne dans une bande spectrale donnée, comprenant une structure (9) portant plusieurs sous-modules (4, 5) qui sont séparables de la structure (9) au moins pour l'un d'entre eux, qui sont disposés en série, qui sont raccordés les uns aux autres par un ou plusieurs raccordements (6) identifiables à l'oeil nu sans mesure optique complémentaire et accessibles de l'extérieur sans endommagement du module, qui comportent chacun un support sur lequel est fixée au moins une fibre optique (2, 3) de compensation de dispersion chromatique dans ladite bande spectrale, ladite fibre optique de compensation (2, 3) étant de même nature pour tous les sous-modules (4, 5), la ligne de transmission optique ayant déjà fonctionné, le procédé d'amélioration comprenant une ou plusieurs étapes d'échange consistant chacune à retirer dudit module l'un (5) des sous-modules et à le remplacer dans ledit module par un sous-module (8) supplémentaire dont la fibre optique (7) de compensation est de nature différente de celle (2) du sous-module (5) retiré, afin d'obtenir un module selon l'une quelconque des revendications 1 à 9.

13. Procédé d'amélioration d'une ligne de transmission optique selon la revendication ou 12, **caractérisé en ce qu'**au moins l'un (4) des sous-modules d'origine n'a fait ni ne fait l'objet d'aucune desdites étapes d'échange.

**Claims**

1. A module for compensating chromatic dispersion of a line optical fiber (1) in a plurality of contiguous and non-overlapping spectral bands each covering at least 30 nanometers, the module including a structure (9) carrying a plurality of submodules (4, 8) at least one of which is separable from the structure (9), which are disposed in series, which are interconnected by one or more connections (6) identifiable to the naked eye without optical measurement and accessible from the outside without damaging the module, and each of which includes a support to which is fixed at least one optical fiber (2, 7) for compensating chromatic dispersion, at least one optical fiber (2) of said plurality of compensation optical fibers (2, 7) having a compensation ratio from 0.9 to 1.1 for the center wavelength of one of said spectral bands, at least two submodules (4, 8) having compensation optical fibers (2, 7) of different kinds.

2. A compensation module according to claim 1, **characterized in that** the spectral bands are bands C and L.

3. A compensation module according to claim 1 or claim 2, **characterized in that** each compensation optical fiber has a compensation ratio from 0.9 to 1.1 for the center wavelength of one of the spectral bands.

4. A compensation module according to any one of claims 1 to 3,
   **characterized in that** each connection comprises at least one weld.

5. A compensation module according to any one of claims 1 to 4,
   **characterized in that** each connection comprises at least one connector.

6. A compensation module according to any preceding claim, **characterized in that** the submodules are independent of one another.

7. A compensation module according to any preceding claim, **characterized in that** the module comprises only two submodules.

8. A compensation module according to any preceding claim, **characterized in that** the compensation optical fiber or fibers of all the submodules are the same length.

9. A compensation module according to any preceding claim, **characterized in that** each submodule comprises only one compensation optical fiber.

10. A method of producing an optical transmission line, the method including a step of installing a line optical fiber (1) and a compensation module according to any one of claims 1 to 9 for said line optical fiber.

11. A method of improving an optical transmission line comprising a line optical fiber (1) and a compensation module according to any one of claims 1 to 9 for compensating said line optical fiber and that has previously been used, the method comprising one or more exchange steps each consisting in removing from said module a submodule (5) and replacing it in said module by a submodule (8) whose compensation optical fiber (7) is of a different kind to the optical fiber (2) of the submodule (5) that has been removed, in order to obtain another module according to any one of claims 1 to 3.

12. A method of improving an optical transmission line comprising a line optical fiber (1) and a module for compensating chromatic dispersion of a line optical fiber (1) in a given spectral band, the module including a structure (9) carrying a plurality of submodules (4, 5) at least one of which is separable from the structure (9), which are disposed in series, which are interconnected by one or more connections (6) identifiable to the naked eye without optical measurement and accessible from the outside without damaging the module, and each of which includes a support to which is fixed at least one optical fiber (2, 3) for compensating chromatic dispersion in said spectral band, said compensation optical fiber (2, 3) being of the same kind for all the submodules (4, 5), the optical transmission line having previously been used, the improvement method comprising one or more exchange steps each consisting in removing from said module a submodule (5) and replacing it in said module by a submodule (8) whose compensation optical fiber (7) is of a different kind to the optical fiber (2) of the submodule (5) that has been removed, in order to obtain a module according to any one of claims 1 to 9.

13. A method according to claim 11 or claim 12 of improving an optical transmission line, **characterized in that** at least one of the original submodules (4) has not been subjected to and is not subjected to any of said exchange steps.

## Patentansprüche

1. Kompensationsmodul für die chromatische Dispersion einer Übertragungs-Lichtleitfaser (1) in mehreren unmittelbar aneinandergrenzenden und voneinander getrennten Spektralbändern, wobei ein Spektralband mindestens 30 nm abdeckt, wobei das Modul eine Struktur (9) umfasst, die mehrere Untermodule (4, 8) trägt, welche zumindest bei einem von ihnen von der Struktur (9) trennbar sind, die in Reihe angeordnet sind, die untereinander durch einen oder mehrere mit bloßem Auge ohne ergänzende optische Messung erkennbare Anschlüsse (6) verbunden sind und die von außen ohne Beschädigung des Moduls zugänglich sind, und von denen jedes eine Halterung umfasst, auf der mindestens eine Kompensations-Lichtleitfaser (2, 7) für die chromatische Dispersion befestigt ist, wobei mindestens eine (2) dieser Kompensations-Lichtleitfasern (2, 7) einen Kompensationsgrad zwischen 0,9 und 1,1 für die zentrale Wellenlänge eines der Spektralbänder aufweist und wobei mindestens zwei Untermodule (4, 8) Kompensations-Lichtleitfasern (2, 7) von untereinander unterschiedlicher Art aufweisen.

2. Kompensationsmodul nach Anspruch 1, **dadurch gekennzeichnet, dass** die Spektralbänder das C- und das L-Band sind.

3. Kompensationsmodul nach einem beliebigen der Ansprüche 1 bis 2, **dadurch gekennzeichnet, dass** jede Kompensations-Lichtleitfaser eine Kompensations-Lichtleitfaser ist, die für die zentrale Wellenlänge des einen der Spektralbänder einen Kompensationsgrad zwischen 0,9 und 1,1 aufweist.

4. Kompensationsmodul nach einem beliebigen der Ansprüche 1 bis 3, **dadurch gekennzeichnet, dass** jeder Anschluss mindestens eine Schweißung aufweist.

5. Kompensationsmodul nach einem beliebigen der Ansprüche 1 bis 4, **dadurch gekennzeichnet, dass** jeder Anschluss mindestens einen Steckverbinder aufweist.

6. Kompensationsmodul nach einem beliebigen der vorhergehenden Anspruche, **dadurch gekennzeichnet, dass** die Untermodule voneinander unabhängig sind.

7. Kompensationsmodul nach einem beliebigen der vorhergehenden Ansprüche, **dadurch gekennzeichnet, dass** das Modul nur zwei Untermodule umfasst.

8. Kompensationsmodul nach einem beliebigen der vorhergehenden Ansprüche, **dadurch gekennzeichnet, dass** die eine oder mehreren Kompensations-Lichtleitfaser(n) für alle Untermodule dieselbe Länge aufweisen.

9. Kompensationsmodul nach einem beliebigen der vorhergehenden Ansprüche, **dadurch gekennzeichnet, dass** jedes Untermodul eine und nur eine einzige Kompensations-Lichtleitfaser umfasst.

10. Verfahren zur Herstellung einer optischen Übertragungsleitung, umfassend einen Installationsschritt einer Übertragungs-Lichtleitfaser (1) und eines Kompensationsmoduls für diese Übertragungs-Lichtleitfaser nach einem beliebigen der Ansprüche 1 bis 9.

11. Verfahren zur Verbesserung einer optischen Übertragungsleitung, umfassend eine Übertragungs-Lichtleitfaser (1) und ein Kompensationsmodul für die Übertragungs-Lichtleitfaser nach einem beliebigen der Ansprüche 1 bis 9, und das bereits im Betrieb war, und wobei das Verfahren einen oder mehrere Austauschschritte umfasst, die jeweils darin bestehen, aus dem Modul eines der Untermodule (5) zu entfernen und es in dem Modul durch ein zusätzliches Untermodul (8) zu ersetzen, dessen Kompensations-Lichtleitfaser (7) von anderer Art ist als jene (2) des ausgebauten Untermoduls (5), um ein anderes Modul nach einem beliebigen der Ansprüche 1 bis 9 zu erhalten.

12. Verfahren zur Verbesserung einer optischen Übertragungsleitung, umfassend eine Übertragungs-Lichtleitfaser (1) und ein Kompensationsmodul für die chromatische Dispersion einer Übertragungs-Lichtleitfaser (1) in einem gegebenen Spektralband, umfassend eine Struktur (9), die mehrere Untermodule (4, 5) trägt, welche zumindest bei einem von ihnen von der Struktur (9) trennbar sind, die in Reihe angeordnet sind, die untereinander durch einen oder mehrere mit bloßem Auge ohne ergänzende optische Messung erkennbare Anschlüsse (6) verbunden sind und die von außen ohne Beschädigung des Moduls zugänglich sind, und von denen Jedes eine Halterung umfasst, auf der mindestens eine Kompensations-Lichtleitfaser (2, 3) für die chromatische Dispersion in dem Spektral band befestigt ist, wobei die Kompensations-Lichtleitfaser (2, 3) für alle Untermodule (4, 5) von derselben Art ist, wobei die optische Übertragungsleitung bereits im Betrieb war und wobei das Verbesserungsverfahren einen oder mehrere Austauschschritte umfasst, die jeweils darin bestehen, aus dem Modul eines der Untermodule (5) zu entfernen und es in dem Modul durch ein zusätzliches Untermodul (8) zu ersetzen, dessen Kompensations-Lichtleitfaser (7) von anderer Art ist als Jene (2) des ausgebauten Untermoduls (5), um ein Modul nach einem beliebigen der Ansprüche 1 bis 9 zu erhalten.

13. Verfahren zur Verbesserung einer optischen Übertragungsleitung nach Anspruch 11 oder 12, **dadurch gekenn-**

**zeichnet, dass** mindestens das eine (4) der Original-Untermodule keinem der Austauschschritte unterzogen wurde noch wird.

## FIG_1

## FIG_2

## FIG_3

| | C/C'  nm | Type | Longueur  km | C@1550nm  ps/(nm.km) | C'@1550nm  ps/(nm².km) | Seff@1550nm  μm² |
|---|---|---|---|---|---|---|
| 1 | | DCF BandeC | 6.250 | -65 | -0.42 | 19 |
| 2 | 158 | DCF BandeL | 6.220 | -66 | -0.37 | 18 |
| 3 | | DCF 3 | 6.220 | -67 | -0.37 | 20 |
| 4 | 200 | DCF BandeC | 5.500 | -72 | -0.37 | 17 |
| 5 | | DCF BandeL | 5.500 | -74 | -0.29 | 15 |
| 6 | 305 | DCF BandeC | 9.265 | -94 | -0.31 | 15 |
| 7 | | DCF BandeL | 9.000 | -97 | -0.30 | 15 |

## FIG_4

| | r1 (μm) | r2 (μm) | r3 (μm) | $\Delta$n1 (x1000) | $\Delta$n2 (x1000) | $\Delta$n3 (x1000) |
|---|---|---|---|---|---|---|
| 1 | 1.76 | 5.23 | 7.79 | 18.4 | -7.0 | 5.8 |
| 2 | 1.67 | 4.90 | 7.72 | 19.9 | -7.0 | 5.0 |
| 3 | 1.78 | 4.93 | 7.80 | 18.0 | -7.0 | 4.9 |
| 4 | 1.58 | 4.88 | 7.73 | 21.3 | -6.4 | 4.7 |
| 5 | 1.40 | 5.39 | 7.34 | 24.3 | -5.1 | 5.9 |
| 6 | 1.40 | 4.01 | 6.88 | 25.4 | -7.0 | 3.6 |
| 7 | 1.33 | 4.40 | 6.29 | 26.0 | -6.0 | 4.7 |

EP 1 383 256 B1

# FIG_5

# FIG_6

# FIG_7

# FIG_8

## FIG_9

## FIG_10

## FIG_11

## FIG_12